# EUROPÄISCHE PATENTANMELDUNG

(11) **EP 1 721 941 A2**
(43) Veröffentlichungstag der Anmeldung: **15.11.2006**
(21) Anmeldenummer: 06008074.4
(22) Anmeldetag: 19.04.2006
(51) Int. Cl.: C09B 67/20, C09C 1/24, C09C 1/34, C09C 1/48, C09D 11/02

(54) **Wasserbasierende Pigmentpräparationen**

(30) Priorität: 28.04.2005 DE 102005019747
(71) Anmelder: Clariant Produkte (Deutschland) GmbH, 65929 Frankfurt am Main (DE)
(72) Erfinder: Glos, Martin, 45145 Essen (DE); Ahrens, Hendrik, 65931 Frankfurt am Main (DE)
(74) Vertreter: Mikulecky, Klaus

(57) **Zusammenfassung**

Gegenstand der Erfindung sind wässrige Pigmentpräparationen, enthaltend
(A) mindestens ein organisches und/oder anorganisches Pigment,
(B) mindestens ein polymeres Dispergiermittel der Formel I, 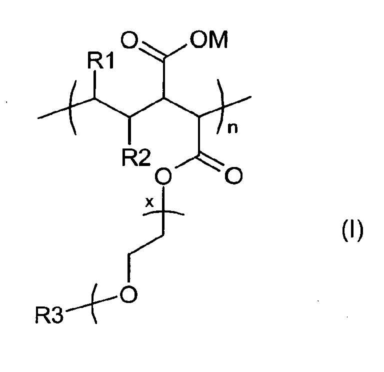 worin
R¹
ein aliphatischer, linearer oder verzweigter Kohlenwasserstoffrest mit 8 bis 30 Kohlenstoffatomen oder ein Wasserstoffatom,
R²
ein aliphatischer, linearer oder verzweigter Kohlenwasserstoffrest mit 8 bis 30 Kohlenstoffatomen oder ein Wasserstoffatom,
R³
eine Kohlenwasserstoffgruppe mit 1 bis 6 Kohlenstoffatomen ist,
n
eine ganze Zahl größer oder gleich 3,
x
eine ganze Zahl von 1 bis 150, und
M
ein Kation ist,

mit der Maßgabe, dass einer der Reste R¹ oder R² für Wasserstoff steht.

## Beschreibung

Gegenstand der vorliegenden Erfindung sind wasserbasierende Pigmentpräparationen, ein Verfahren zu ihrer Herstellung, ihre Verwendung zum Färben von makromolekularen Materialien aller Art, wie beispielsweise Fasermaterialien, Papiermassefärbung, Beschichtungsstoffe, Lacke, Farben und ihre Verwendung zum Bedrucken von zweidimensionalen Flächengebilden wie beispielsweise Papier, Kartonagen, Kunststoff, Textilien und Leder.

Es ist seit vielen Jahren üblich, für die Herstellung von Pigmentpräparationen Novolake einzusetzen. EP-B-0 065 751 beschreibt die Verwendung von Novolaken für Pigmentpräparationen, die sich dadurch auszeichnen, dass sie hohe Pigmentkonzentrationen enthalten, scherstabil und lagerbeständig sind. Aufgrund von enthaltenen Nebenkomponenten wie Alkylphenole und Alkylphenolethoxylaten sind Novolake heutzutage unerwünscht, da die EG-Direktive 2003/53 ihren Einsatz einschränkt.

Der vorliegenden Erfindung lag daher die Aufgabe zugrunde, wässrige Pigmentpräparationen bereitzustellen, die keine Novolake enthalten und die das folgende Anforderungsprofil erfüllen: Die Pigmentpräparationen sollten über eine hohe Scher- bzw. Flockenstabilität verfügen. Die Konzentration der Pigmente in den Präparationen sollte möglichst hoch sein und in der Regel bei mindestens 20 Gew.-% liegen. Die Pigmentpräparationen sollen über eine hohe Farbstärke, genau definierte Coloristik hinsichtlich Farbtönen und Farbreinheit, eine hohe Licht- und Ausblutechtheit und niedrige Viskosität verfügen. Eine Lagerstabilität von mindestens zwei Jahren wird angestrebt, d.h. die dispergierten Pigmente sollen in dieser Zeit nicht agglomerieren und sich absetzen. Außerdem sollen die Pigmentdispersionen über eine hohe Reinheit verfügen.

Ökotoxikologisch einwandfreie Pigmentdispersionen basieren weitgehend auf Wasser und enthalten nur solche organischen Lösungsmittel, deren Siedepunkt über 250°C beträgt und die damit nicht zu den flüchtigen organischen Komponenten gezählt werden.

Überraschenderweise wurde gefunden, dass durch die Verwendung von Dispergiermitteln auf Basis eines Carboxylats eines α-Olefin ― Maleinsäure ― Halbesters wässrige Pigmentpräparationen hergestellt werden können, die die oben angesprochenen Qualitätsanforderungen erfüllen. Nachfolgende wässrige Pigmentdispersionen sind scherbeständig, eintrockenbeständig, lagerbeständig, schäumen bei der Applikation nicht oder nur wenig und verfügen über eine hervorragende Rheologie.

Gegenstand der Erfindung sind daher wässrige Pigmentpräparationen, enthaltend
(A) mindestens ein organisches und/oder anorganisches Pigment,
(B) mindestens ein polymeres Dispergiermittel der Formel I, 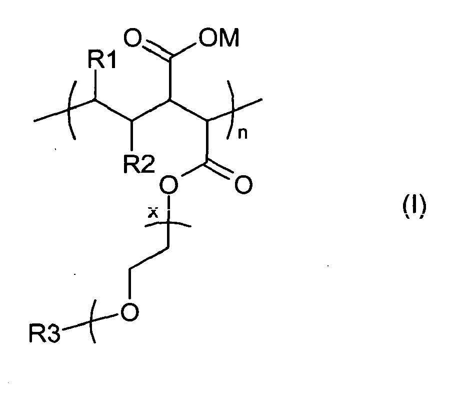 worin
   - R¹: ein aliphatischer, linearer oder verzweigter Kohlenwasserstoffrest mit 8 bis 30 Kohlenstoffatomen oder ein Wasserstoffatom,
   - R²: ein aliphatischer, linearer oder verzweigter Kohlenwasserstoffrest mit 8 bis 30 Kohlenstoffatomen oder ein Wasserstoffatom,
   - R³: eine Kohlenwasserstoffgruppe mit 1 bis 6 Kohlenstoffatomen ist,
   - n: eine ganze Zahl größer oder gleich 3,
   - x: eine ganze Zahl von 1 bis 150, und
   - M: ein Kation ist,
mit der Maßgabe, dass einer der Reste R¹ oder R² für Wasserstoff steht.

Vorzugsweise ist R3 eine Methyl-, Ethyl-, Propyl-, Butyl-, Pentyl- oder Hexylgruppe.

n ist vorzugsweise eine ganze Zahl von 4 bis 1000, insbesondere von 5 bis 500, speziell von 6 bis 100.

Vorzugsweise steht M für Natrium, Kalium, Ammonium, Ethanolammonium, Triethanolammonium oder Trimethylammonium.

Neben den Bestandteilen (A) und (B) kann die erfindungsgemäße Zusammensetzung weitere Bestandteile enthalten. So enthält die erfindungsgemäße Zusammensetzung in bevorzugten Ausführungsformen
(C) gegebenenfalls ein oder mehrere nichtionische Tenside aus der Gruppe der Alkylphenolpolyethylenglykolether, styrolsubstituierten Phenolpolyethylenglycolether, Alkylpolyethylenglykolether, Fettsäurepolyethylenglykolether, Fettsäurepolyglycoside, Alkylpolyalkylglycolether von C₈―C₂₂-Alkoholen, die mit Ethylenoxid und Propylenoxid blockweise umgesetzt wurden, endgruppenverschlossenen Alkylethoxylaten von C₈-C₂₂-Alkoholen, die mit Ethylenoxid umgesetzt wurden und mit Methylchlorid, Butylchlorid oder Benzylchlorid verethert wurden, Ethylen/Propylenglykol-Blockpolymere und Sorbitanesterpolyethylenglykolether;
(D) gegebenenfalls ein oder mehrere anionische Tenside aus der Gruppe der Natrium-, Kalium- und Ammoniumsalze von Fettsäuren, Natriumalkylbenzolsulfonate, Natriumalkylsulfonate, Natriumolefinsulfonate, Natriumpolynaphthalinsulfonate, Natriumdialkyldiphenyletherdisulfonate, Natrium-, Kalium- und Ammoniumalkylsulfate, Natrium-, Kalium- und Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und Monoalkylpolyoxethylsulfosuccinate, sowie Alkylpolyethylenglykoletherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze, Alkylpolyethylenglycolethercarbonsäuren und deren Natrium-, Kalium- und Ammoniumsalze, Schwefelsäurehalbester und Phosphorsäureester von styrolsubstituierten Phenolethoxylaten, styrolsubstituierte Phenolpolyethylenglycolethercarbonsäuren und ihre Natrium-, Kalium- und Ammoniumsalze, Natriumfettsäureisethionate, Natriumfettsäuremethylthauride und Natriumfettsäuresarkoside;
(E) gegebenenfalls einen oder mehrere Polyethylenglykolether mit einer mittleren Molmasse zwischen 200 und 2000 g/mol;
(F) gegebenenfalls einen oder mehrere Polyethylenglycolmonoalkylether mit einer mittleren Molmasse zwischen 200 und 2000 g/mol und einem Alkylrest aus 1 - 6 Kohlenstoffatomen;
(G) gegebenenfalls ein oder mehrere organische Lösemittel oder eine oder mehrere hydrotrope Substanzen;
(H) gegebenenfalls weitere, für wässrige Pigmentpräparationen übliche Zusatzstoffe;
(J) gegebenenfalls ein Konservierungsmittel; und
(K) Wasser.

Die Bestandteile (A) bis (K) sind vorzugsweise in folgenden Mengen vorhanden:
(A) 3 bis 80 Gew.-%, vorzugsweise 20 bis 70 Gew.-%, insbesondere 30 bis 50 Gew.-%, mindestens eines organischen und/oder anorganischen Pigments.
(B) 0,1 bis 30 Gew.-%, vorzugsweise 1 bis 15 Gew.-%, mindestens einer Verbindung der Formel I.
(C) 0 bis 30 Gew.-%, vorzugsweise 1 bis 15 Gew.-%, eines nichtionischen Tensids.
(D) 0 bis 30 Gew.-%, vorzugsweise 1 bis 15 Gew.-%, eines anionischen Tensids.
(E) 0 bis 50 Gew.-%, vorzugsweise 1 bis 20 Gew.-%, eines Polyethylenglykolethers mit einer mittleren Molmasse zwischen 200 und 2000 g/mol.
(F) 0 bis 50 Gew.-%, vorzugsweise 1 bis 20 Gew.-%, eines Polyethylenglykolmonoalkylethers mit einer mittleren Molmasse zwischen 200 und 2000 g/mol und einem Alkylrest aus 1 - 6 Kohlenstoffatomen.
(G) 0 bis 30 Gew.-%, vorzugsweise 0 bis 20 Gew.-%, eines organischen Lösemittels oder einer hydrotropen Substanz.
(H) 0 bis 10 Gew.-%, vorzugsweise 0 bis 5 Gew.-%, weiterer für wässrige Pigmentpräparationen üblicher Zusatzstoffe.
(J) 0 bis 2 Gew.-% vorzugsweise 0,02 bis 0,05 Gew.-% eines Konservierungsstoffes.
(K) 5 bis 90 Gew.-%, vorzugsweise 10 bis 70 Gew.-%, an Wasser.

Die Gewichtsprozente sind jeweils auf das Gesamtgewicht der Pigmentpräparation bezogen.

Im Falle dass eine oder mehrere der Komponenten (C), (D), (E), (F), (G), (H) und (J) vorhanden sind, beträgt deren Minimalkonzentration unabhängig voneinander zweckmäßigerweise mindestens 0,01 Gew.-%, bevorzugt mindestens 0,1 Gew.-%, bezogen auf das Gesamtgewicht der Pigmentpräparation.

Die Komponente (A) der erfindungsgemäßen Pigmentpräparation ist ein feinteiliges organisches oder anorganisches Pigment oder ein Gemisch verschiedener organischer und/oder anorganischer Pigmente. Dabei können die Pigmente sowohl in Form trockenen Pulvers als auch als wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-MetallkomplexPigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrroi-Pigmente oder Ruße in Betracht.

Von den genannten organischen Pigmenten sind diejenigen besonders geeignet, deren anhand eines Blaumaßstabs ermittelte Lichtechtheit mit einer Note größer 5, insbesondere größer 6, beurteilt wird. Zudem sollten die für die Herstellung der Präparationen verwendeten Pigmente möglichst feinteilig sein, wobei bevorzugt 95 % und besonders bevorzugt 99 % der Pigmentpartikel eine Teilchengröße ≤ 500 nm besitzen.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254 zu nennen.

Geeignete anorganische Pigmente sind beispielsweise Titandioxide, Zinksulfide, Eisenoxide, Chromoxide, Ultramarin, Nickel- oder Chromantimontitanoxide, Cobaltoxide, Mischoxide des Cobalts und Aluminiums, Bismutvanadate sowie Verschnittpigmente.

Anstelle von Pigmentdispersionen lassen sich auch Dispersionen herstellen, die als Feststoffe beispielsweise feinteilige Erze, Mineralien, schwer- oder unlösliche Salze, Wachs- oder Kunststoffteilchen, Farbstoffe, Pflanzenschutz- und Schädlingsbekämpfungsmittel, UV-Absorber, optische Aufheller und Polymerisationsstabilisatoren enthalten.

Komponente (B) wird üblicherweise als wässrige Lösung zur Herstellung der erfindungsgemäßen Pigmentpräparationen eingesetzt. Komponente (B) wird durch Massepolymerisation eines α-Olefins mit Maleinsäureanhydrid unter Verwendung eines radikalischen Polymerisationsinitiators erhalten. Das resultierende α-Olefin-Maleinsäureanhydrid-Copolymer wird anschließend mit einem Polyethylenglycolmonoalkylether zu einem Halbester umgesetzt und mit einer geeigneten Base in Wasser neutralisiert. Der Polyethylenglykolmonoalkylether enthält vorzugsweise 1 - 150 Ethylenglykoleinheiten und einen Alkylrest mit 1 - 6 Kohlenstoffatomen. EP 0 181 037 beschreibt die Herstellung der Komponente (B).

Der Komponente (G) entsprechen wasserlösliche organische oder hydrotrope Substanzen. Solche Verbindungen, die gegebenenfalls auch als Lösungsmittel dienen, können beispielsweise Formamid, Harnstoff, Tetramethylharnstoff, ε-Caprolactam, Ethylenglykol, Propylenglykol, Diethylenglykol, Triethylenglykol, Polyethylenglykol, Butylglykol, Glycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat oder Natrium-Butylmonoglykolsulfat sein.

Als übliche Zusatzstoffe (Komponente H) kommen weitere kationische, anionische, amphotere oder nicht ionogene Tenside und die Figmentbenetzung fördernde Substanzen (Netzmittel), sowie Antiabsetzmittel, Lichtschutzmittel, Antioxidantien, Entgaser/Entschäumer, schaumreduzierende Mittel, Füllstoffe, Mahlhilfsmittel, Viskositätsstabilisatoren und Additive, welche die Rheologie günstig beeinflussen, in Betracht. Als Mittel zur Regulierung der Viskosität kommen z.B. Polyvinylalkohol und Cellulosederivate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak.

Zur Herstellung der Pigmentpräparationen benutztes Wasser, Komponente (K), wird vorzugsweise in Form von destilliertem oder entsalztem Wasser eingesetzt. Auch Trinkwasser (Leitungswasser) und/oder Wasser natürlichen Ursprungs kann eingesetzt werden.

Die erfindungsgemäßen Pigmentpräparationen sind in jedem Verhältnis mit Wasser mischbar, wobei sich auch mehrere unterschiedliche Präparationen mit Wasser mischen lassen. Sie zeichnen sich gegenüber herkömmlichen Pigmentpräparationen durch eine hervorragende Scherstabilität aus. Die Pigmentpräparationen besitzen eine gute Lagerbeständigkeit und weisen eine sehr geringe Agglomerations- und Sedimentationsneigung auf. Die Pigmentpräparationen verfügen über hohe Farbstärke, definierte Farbtöne, hohe Licht- und Ausblutechtheit und niedrige Viskosität mit guten rheologische Eigenschaften und annähernd newton'schem Fließverhalten.

Gegenstand der vorliegenden Erfindung ist auch ein Verfahren zur Herstellung der erfindungsgemäßen Pigmentpräparationen, dadurch gekennzeichnet, dass man die Komponente (A) in Form von Pulver, Granulat oder wässrigem Presskuchen in Gegenwart von Wasser (K) sowie der Komponenten (B), und gegebenenfalls (C), (D), (E), (F), (G), (H) und (J) in an sich üblicher Weise dispergiert, anschließend gegebenenfalls Wasser (K) zumischt und die erhaltende wässrige Pigmentdispersion mit Wasser auf die gewünschte Konzentration einstellt. Vorzugsweise werden die Komponenten (B), (C), (D), (E), (F), (G), (H), (J) und (K) vermischt und homogenisiert, dann die Komponente (A) in die vorgelegte Mischung eingerührt, wobei das Pigment angeteigt und vordispergiert wird. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100°C erfolgen, zweckmäßig bei einer Temperatur zwischen 10 und 70°C, vorzugsweise bei 20 bis 60°C. Im Anschluss an die Feindispergierung kann die Pigmentpräparation mit Wasser, vorzugsweise entionisiertem oder destilliertem Wasser, weiter verdünnt werden.

Die erfindungsgemäßen Pigmentpräparationen eignen sich zum Pigmentieren und Färben von makromolekularen Materialien aller Art, z.B. von natürlichen und synthetischen Fasermaterialien, bevorzugt Cellulosefasern, insbesondere für Textileinfärbung und Textilbedruckung.

Ferner eignen sich die erfindungsgemäßen Pigmentpräparation zur Pigmentierung bzw. Herstellung von Anstrich- und Dispersionsfarben, Dispersionslacken, Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, Wurstdärmen, Saatgut, Düngemittel, Glasflaschen, sowie zur Massefärbung von Dachziegeln, zur Einfärbung für Putze, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentpräparationen zur Herstellung von Drucktinten für den Einsatz in allen konventionellen Ink-Jet-Druckern, insbesondere für solche, die auf dem Bubble-Jet- oder Piezo-Verfahren beruhen. Mit diesen Drucktinten kann Papier bedruckt werden, sowie natürliche oder synthetische Fasermaterialien, Folien und Kunststoffe. Zudem können die erfindungsgemäßen Pigmentpräparationen zum Bedrucken verschiedenster Arten von beschichteten oder unbeschichteten Substratmaterialien verwendet werden, so z.B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Die erfindungsgemäßen Pigmentpräparationen sind außerdem geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner. Typische Tonerbindemittel hierbei sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Ferner sind die erfindungsgemäßen Pigmentpräparationen außerdem geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen. Als Pulverlackharze werden hier typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentpräparationen als Farbmittel in Tinten, vorzugsweise Ink-Jet Tinten, wie z.B. auf wässriger oder nichtwässriger Basis, Mikroemulsionstinten, UV-härtbare Tinten sowie in solchen Tinten, die nach dem Hot-Melt-Verfahren funktionieren, geeignet.

### Beispiele

Herstellung einer Pigmentpräparation

Das Pigment wird, entweder als Pulver, Granulat oder als Presskuchen, zusammen mit den Dispergiermitteln und den anderen Zusätzen in entionisiertem Wasser angeteigt und dann mit einem Dissolver (z.B. von der Firma VMA-Getzmann GmbH, Type AE3-M1) oder einer anderen geeigneten Apparatur homogenisiert und vordispergiert. Die anschließende Feindispergierung erfolgt mit Hilfe einer Perlmühle (z.B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgt. Im Anschluss wird die Dispersion mit entionisiertem Wasser auf die gewünschte Pigmentendkonzentration eingestellt, die Mahlkörper abgetrennt und die Pigmentpräparation isoliert.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beispiel 1

- 35 Teile: C.I. Pigment Blue 15:1 (^{®}Hostaperm Blau A2R, Komponente A),
- 10 Teile: Dispergiermittel der Formel (I) mit R¹ = C₁₂/C₁₄-Alkylrest, R² = Methylrest, x = 7 - 8, M = Na⁺ (Komponente B),
- 2 Teile: Alkylpolyalkylenglycolether (Komponente C),
- 9,5 Teile: Polyethylenglykol, Molekulargewicht 200 g/mol (Komponente E),
- 1 Teil: Entschäumer (Komponente H)
- 0,2 Teile: Konservierungsmittel (Komponente J),
- 42,3 Teile: vollentsalztes Wasser (Komponente K)

In einem Mahlbehälter werden die Komponenten (B), (C), (E), (H) und (J) vorgelegt und vermischt. Anschließend wird die pulverförmige Komponente (A) zugegeben und mit dem Dissolver vordispergiert. Die Feindispergierung erfolgt in einer Perlmühle mittels Zirkonmischoxidperlen der Größe d = 1 mm unter Kühlung. Anschließend werden die Mahlkörper abgetrennt und die Pigmentpräparation isoliert. Die Pigmentpräparation wird eine Woche bei 60°C gelagert und visuell beurteilt. Die Viskosität der Pigmentpräparation wird mit einem Brookfield Digital Viscometer Model DV-II bei 100 Umdrehungen pro Minute mit der Spindel 4 gemessen.

Die Pigmentpräparation ist nach einwöchiger Lagerung bei 60°C flüssig, homogen und schaumfrei. Die Viskosität der Pigmentpräparation beträgt 68 mPa·s.

### Beispiel 2

- 30 Teile: C.I. Pigment Red 122 (^{®}Hostaperm Rot E-WD, Komponente A),
- 5 Teile: Dispergiermittel der Formel (I) mit R¹ = C₁₂/C₁₄-Alkylrest, R² = Methylrest, x = 7 - 8, M = Na⁺ (Komponente B),
- 2 Teile: Alkylpolyalkylenglycolether (Komponente C),
- 9,5 Teile: Polyethylenglykol, Molekulargewicht 200 g/mol (Komponente E),
- 1 Teil: Entschäumer (Komponente H)
- 0,2 Teile: Konservierungsmittel (Komponente J),
- 52,3 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 180 mPa·s.

### Beispiel 3

- 30 Teile: C.I. Pigment Black 7 (Spezial Schwarz 4 von Degussa AG, Komponente A),
- 5 Teile: Dispergiermittel der Formel (I) mit R¹ = C₁₂/C₁₄-Alkylrest, R² = Methylrest, x = 7 - 8, M = Na⁺ (Komponente B),
- 2 Teile: Alkylpolyalkylenglycolether (Komponente C),
- 9,5 Teile: Polyethylenglykol, Molekulargewicht 200 g/mol (Komponente E),
- 1 Teil: Entschäumer (Komponente H)
- 0,2 Teile: Konservierungsmittel (Komponente J),
- 52,3 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 26 mPa·s.

### Beispiel 4

- 40 Teile: C.I. Pigment Red 146 (^{®}Permanent Carmin FBB 02, Komponente A),
- 5 Teile: Dispergiermittel der Formel (I) mit R¹ = C₁₂/C₁₄-Alkylrest, R² = Methylrest, x = 7 - 8, M = Na⁺ (Komponente B),
- 2 Teile: Alkylpolyalkylenglycolether (Komponente C),
- 9,5 Teile: Polyethylenglykol, Molekulargewicht 200 g/mol (Komponente E),
- 1 Teil: Entschäumer (Komponente H)
- 0,2 Teile: Konservierungsmittel (Komponente J),
- 42,3 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 300 mPa·s.

### Beispiel 5

- 30 Teile: C.I. Pigment Violet 23 (^{®}Hostaperm Violet BL, Komponente A),
- 5 Teile: Dispergiermittel der Formel (I) mit R¹ = C₁₂/C₁₄-Alkylrest, R² = Methylrest, x = 7 - 8, M = Na⁺ (Komponente B),
- 2 Teile: Alkylpolyalkylenglycolether (Komponente C),
- 9,5 Teile: Polyethylenglykol, Molekulargewicht 200 g/mol (Komponente E),
- 1 Teil: Entschäumer (Komponente H)
- 0,2 Teile: Konservierungsmittel (Komponente J),
- 52,3 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 55 mPa·s.

### Beispiel 6

- 20 Teile: C.I. Pigment Violet 19 (^{®}Hostaperm Rot E5B 02, Komponente A),
- 5 Teile: Dispergiermittel der Formel (I) mit R¹ = C₁₂/C₁₄-Alkylrest, R² = Methylrest, x = 7 - 8, M = Na⁺(Komponente B),
- 2 Teile: Alkylpolyalkylenglycolether (Komponente C),
- 9,5 Teile: Polyethylenglykol, Molekulargewicht 200 g/mol (Komponente E),
- 1 Teil: Entschäumer (Komponente H)
- 0,2 Teile: Konservierungsmittel (Komponente J),
- 62,3 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 53 mPa·s.

### Beispiel 7

- 40 Teile: C.I. Pigment Red 184 (^{®}Permanent Rubin F6B, Komponente A),
- 8 Teile: Dispergiermittel der Formel (I) mit R¹ = C₁₂/C₁₄-Alkylrest, R² = Methylrest, x = 7 - 8, M = Na⁺ (Komponente B),
- 2 Teile: Alkylpolyalkylenglycolether (Komponente C),
- 9,5 Teile: Polyethylenglykol, Molekulargewicht 200 g/mol (Komponente E),
- 1 Teil: Entschäumer (Komponente H)
- 0,2 Teile: Konservierungsmittel (Komponente J),
- 29,3 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 189 mPa·s.

### Beispiel 8

- 60 Teile: C.I. Pigment Red 102 (^{®}Bayferrox130 von Bayer AG, Komponente A),
- 9 Teile: Dispergiermittel der Formel (I) mit R¹ = C₁₂/C₁₄-Alkylrest, R² = Methylrest, x = 7 - 8, M = Na⁺ (Komponente B),
- 1 Teil: Alkylpolyalkylenglycolether (Komponente C),
- 0,2 Teile: Konservierungsmittel (Komponente H),
- 1 Teil: Entschäumer (Komponente J)
- 28,8 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 70 mPa·s.

### Beispiel 9

- 60 Teile: C.I. Pigment Red 102 (^{®}Bayferrox130 von Bayer AG, Komponente A),
- 9 Teile: Dispergiermittel der Formel (I) mit R¹ = C₁₈/C₂₂-Alkylrest, R² = Methylrest, x = ca. 25, M = Na⁺ (Komponente B),
- 1 Teil: Alkylpolyalkylenglycolether (Komponente C),
- 1 Teil: Entschäumer (Komponente H)
- 0,2 Teile: Konservierungsmittel (Komponente J),
- 28,8 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 76 mPa·s.

### Beispiel 10

- 60 Teile: C.I. Pigment Yellow 42 (^{®}Bayferrox 3920 von Bayer AG, Komponente A),
- 9 Teile: Dispergiermittel der Formel (I) mit R¹ = C₁₈/C₂₂-Alkylrest, R² = Methylrest, x = ca. 45, M = Na⁺ (Komponente B),
- 1 Teil: Alkylpolyalkylenglycolether (Komponente C),
- 1 Teil: Entschäumer (Komponente H)
- 0,2 Teile: Konservierungsmittel (Komponente J),
- 28,8 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 147 mPa·s.

### Beispiel 11

- 60 Teile: C.I. Pigment Black 11 (^{®}Bayferrox 316 von Bayer AG, Komponente A),
- 9 Teile: Dispergiermittel der Formel (I) mit R¹ = C₁₈/C22-Alkylrest, R² = Methylrest, x = ca. 25, M = Na⁺ (Komponente B),
- 1 Teil: Alkylpolyalkylenglycolether (Komponente C),
- 1 Teil: Entschäumer (Komponente H)
- 0,2 Teile: Konservierungsmittel (Komponente J),
- 28,8 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 253 mPa·s.

### Beispiel 12

- 35 Teile: C.I. Pigment Yellow 34 (^{®}Permanent Orange RL 70, Komponente A),
- 5 Teile: Dispergiermittel der Formel (I) mit R¹ = C₁₂/C₁₄-Alkylrest, R² = Methylrest, x = 7 - 8, M = Na⁺ (Komponente B),
- 2 Teile: Alkylpolyalkylenglycolether (Komponente C),
- 9,5 Teile: Polyethylenglykol, Molekulargewicht 200 g/mol (Komponente E),
- 1 Teil: Entschäumer (Komponente H)
- 0,2 Teile: Konservierungsmittel (Komponente J),
- 47,3 Teile: vollentsalztes Wasser (Komponente K)

Es wird bei der Herstellung und Ausprüfung der Pigmentpräparation wie unter Beispiel 1 ausgeführt vorgegangen. Die Pigmentpräparation ist nach einwöchiger Lagerung bei 60°C flüssig, homogen und schaumfrei. Die Viskosität der Pigmentpräparation beträgt 275 mPa·s.

## Patentansprüche

1. Wässrige Pigmentpräparationen, enthaltend
(A) mindestens ein organisches und/oder anorganisches Pigment,
(B) mindestens ein polymeres Dispergiermittel der Formel I, 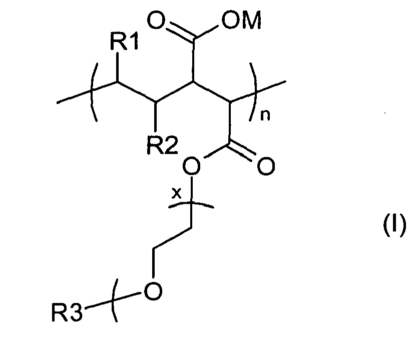
worin
R¹ ein aliphatischer, linearer oder verzweigter Kohlenwasserstoffrest mit 8 bis
30 Kohlenstoffatomen oder ein Wasserstoffatom,
R² ein aliphatischer, linearer oder verzweigter Kohlenwasserstoffrest mit 8 bis
30 Kohlenstoffatomen oder ein Wasserstoffatom,
R³ eine Kohlenwasserstoffgruppe mit 1 bis 6 Kohlenstoffatomen ist,
n eine ganze Zahl größer oder gleich 3,
x eine ganze Zahl von 1 bis 150, und
M ein Kation ist,
mit der Maßgabe, dass einer der Reste R¹ oder R² für Wasserstoff steht.

2. Pigmentpräparation nach Anspruch 1, worin R¹ oder R² ein Alkylrest ist.

3. Pigmentpräparation nach Anspruch 1 und/oder 2, worin n eine ganze Zahl von 4 bis 1000 ist.

4. Pigmentpräparation nach einem oder mehreren der Ansprüche 1 bis 3, worin M für Natrium, Kalium, Ammonium, Ethanolammonium, Triethanolammonium oder Trimethylammonium steht.

5. Pigmentpräparation nach einem oder mehreren der Ansprüche 1 bis 4, enthaltend 3 bis 80 Gew.-%, mindestens eines organischen und/oder anorganischen Pigments.

6. Pigmentpräparation nach einem oder mehreren der Ansprüche 1 bis 5, enthaltend 0,1 bis 30 Gew.-% mindestens einer Verbindung der Formel I.

7. Pigmentpräparation nach einem oder mehreren der Ansprüche 1 bis 6, enthaltend bis 30 Gew.-% eines nichtionischen Tensids.

8. Pigmentpräparation nach einem oder mehreren der Ansprüche 1 bis 7, enthaltend bis 30 Gew.-% eines anionischen Tensids.

9. Pigmentpräparation nach einem oder mehreren der Ansprüche 1 bis 8, enthaltend 0 bis 50 Gew.-% eines Polyethylenglykolethers mit einer mittleren Molmasse zwischen 200 und 2000 g/mol.

10. Pigmentpräparation nach einem oder mehreren der Ansprüche 1 bis 9, enthaltend 0 bis 50 Gew.-% eines Polyethylenglykolmonoalkylethers mit einer mittleren Molmasse zwischen 200 und 2000 g/mol und einem Alkylrest aus 1 - 6 Kohlenstoffatomen.

11. Pigmentpräparation nach einem oder mehreren der Ansprüche 1 bis 10, enthaltend 0 bis 30 Gew.-% eines organischen Lösemittels oder einer hydrotropen Substanz.

12. Pigmentpräparation nach einem oder mehreren der Ansprüche 1 bis 11, enthaltend 0 bis 10 Gew.-% weiterer für wässrige Pigmentpräparationen üblicher Zusatzstoffe.

13. Pigmentpräparation nach einem oder mehreren der Ansprüche 1 bis 12, enthaltend 0 bis 2 Gew.-% eines Konservierungsstoffes.

14. Verfahren zur Herstellung von Pigmentpräparationen, **dadurch gekennzeichnet, dass** man mindestens ein organisches und/oder anorganisches Pigment in Form von Pulver, Granulat oder wässrigem Presskuchen in Gegenwart von Wasser sowie mindestens einer Verbindung der Formel I in an sich üblicher Weise dispergiert, anschließend gegebenenfalls Wasser zumischt und die erhaltende wässrige Pigmentdispersion mit Wasser auf die gewünschte Konzentration einstellt.

15. Verwendung von Pigmentpräparationen gemäß Anspruch 1 zum Färben von makromolekularen Materialien und zum Bedrucken von zweidimensionalen Flächengebilden.
